# EUROPÄISCHE PATENTSCHRIFT

(11) **EP 3 002 840 B1**
(45) Veröffentlichungstag und Bekanntmachung des Hinweises auf die Patenterteilung: **20.12.2017**
(21) Anmeldenummer: 14186977.6
(22) Anmeldetag: 30.09.2014
(51) Int. Cl.: H02G 7/05, H01B 17/06

(54) **BEFESTIGUNGSVORRICHTUNG FÜR EINEN ISOLATOR**
FASTENING DEVICE FOR AN INSULATOR
DISPOSITIF DE FIXATION POUR UN ISOLATEUR

(43) Veröffentlichungstag der Anmeldung: 06.04.2016
(73) Patentinhaber: Siemens Aktiengesellschaft, 80333 München (DE)
(72) Erfinder: Flohe, Daniel, 13351 Berlin (DE); Pippert, Erhard, 14624 Dallgow-Döberritz OT Seeburg (DE); Robben, Bastian, 13507 Berlin (DE); Sulitze, Markus, 14612 Falkensee (DE)

(56) Entgegenhaltungen:
- WO-A2-2013/182369
- FR-A- 575 912
- JP-A- H07 134 923
- JP-A- H07 262 846

## Beschreibung

Gegenstand der Erfindung ist eine Befestigungsvorrichtung zur Befestigung eines Isolators an einem Mastausleger eines Mastes eines Stromübertragungsnetzes.
An Masten eines Stromübertragungsnetzes müssen häufig Komponenten wie Isolatoren oder Überspannungsableiter angebracht werden. Beide haben einen langgestreckten zylindrischen Körper, der sich entlang einer Längsachse erstreckt und der von Anschlussarmaturen an beiden Enden begrenzt ist. In der Folge wird der Begriff Isolator als Sammelbegriff für solche Komponenten verwendet, es sollen darunter aber alle derartige Komponenten, insbesondere auch Überspannungsableiter verstanden werden. Eine der Anschlussarmaturen ist mit der Stromübertragungsleitung verbunden, die andere mit einem Erdungspunkt am Mast. Zur Montage wird häufig eine Masttraverse verwendet, an der der Isolator hängend oder stehend angebracht wird. Dazu sind Befestigungsvorrichtungen notwendig.
Aus der WO 2013/182369 A2 ist eine solche Befestigungsvorrichtung bekannt. Ein Spannband, das über eine Tragschiene verläuft wird dort um eine Masttraverse mit einem Doppel-T-Profil gespannt, der Isolator wird an der Tragschiene befestigt. Nachteilig hieran ist, dass sich diese Befestigungsvorrichtung nicht für Winkel- oder Fachprofile der Masttraverse eignet.
Aus der WO 2007/150038 A2 ist eine weitere Befestigungsvorrichtung bekannt. Dort wird der Isolator mittels Spannbügeln gehalten, die Befestigungsvorrichtung wird mit Schrauben an der Masttraverse befestigt. Nachteilig hieran ist, dass an der Masttraverse entsprechende Bohrungen vorhanden sein müssen.

Die CN 203205818 U zeigt eine Befestigungsvorrichtung, bei der eine Trägerplatte an der Masttraverse befestigt wird, indem zwei U-förmige Bügel um die Masttraverse gelegt und mit der Trägerplatte verschraubt werden und so die Masttraverse zwischen den Bügeln und der Trägerplatte eingespannt wird. An der Trägerplatte ist ein Podest befestigbar, an dem der Isolator befestigt werden kann. Nachteilig hieran ist, dass die Montage des Isolators hiermit aufwändig ist.
Zudem sind bei allen bekannten Befestigungsvorrichtungen die Isolatoren starr befestigt. Bei starkem Wind kann aber das erd- oder hochspannungsseitige Anschlusskabel am nicht befestigten Ende des Isolators eine Kraft quer zur Längsachse des Isolators ausüben, was unerwünscht ist. Aus der
DE 10 2008 008 022 A1 ist bekannt, das erdseitige Anschlusskabel kardanisch an einem mit einem Flansch des Isolators verbundenen Bügel aufzuhängen. Jedoch ist nicht gezeigt, wie der Isolator befestigt wird.
Ferner ist aus der Druckschrift FR 574912 A eine Befestigungsvorrichtung nach dem Oberbegriff des Anspruchs 1 bekannt, die eine bewegliche Aufhängung aufweist.
Aufgabe der Erfindung ist es, eine Befestigungsvorrichtung anzugeben, die sich für Winkel- und Flachprofile eignet, die mit wenigen Teilen auskommt, die einfach und schnell montierbar ist und die Zugbelastungen quer zur Längsachse des Isolators vermeidet.
Erfindungsgemäß ist dazu eine Befestigungsvorrichtung zur klemmenden Befestigung eines Isolators an einer ein Flach- oder Winkelprofil aufweisenden Masttraverse vorgesehen. Die Befestigungsvorrichtung umfasst eine Stützplatte und ein Klemmelement zur Anlage an gegenüberliegenden Flächen der Masttraverse, wobei als Flächen der Masttraverse die breiten Seiten eines Flachprofils angesehen werden, wobei ein Winkelprofil aus zwei miteinander verbundenen Flachprofilen besteht. Außerdem umfasst die Befestigungsvorrichtung einen Spannbolzen, der die Stützplatte und das Klemmelement miteinander verbindet. Der Spannbolzen weist ein Anschlagelement und einen Gewindeabschnitt auf, entlang dem eine Spannmutter verstellbar angeordnet ist. Durch Verstellen der Spannmutter in Richtung Anschlagelement sind die Stützplatte und das Klemmelement gegen die Masttraverse klemmbar. Die Masttraverse wird dabei zwischen Stützplatte und Klemmelement eingeklemmt. Der Isolator ist am Spannbolzen beweglich hängend befestigbar. Zwischen dem Spannbolzen und einem am Isolator befestigbaren Befestigungselement wird dabei eine gelenkartige Verbindung ausgebildet. Die gelenkartige Verbindung kann eine einachsige, wie ein Scharnier- oder Drehgelenk sein, oder aber zwei- und mehrachsig, wie ein Kreuz-, ein Kugel-, ein Kardangelenk oder eine kardanische Aufhängung, sein. Vorzugsweise ist der Isolator dabei um zumindest zwei Achsen, insbesondere zwei sich rechtwinklig schneidende Achsen, drehbar. Beispielsweise bei einem Kugelgelenk weist der Spannbolzen an einem freien Ende eine Kugelgelenkpfanne auf und eine dazu korrespondierende Gelenkkugel ist beispielsweise mittels einer in der Gelenkkugel angeordneten Gewindebohrung am Anschlussbolzen des Isolators befestigbar. Eine solche Befestigungsvorrichtung ist einfach herstellbar, einfach zu montieren und gewährleistet für den Isolator einen Bewegungsspielraum, so dass Zugbelastungen quer zur Längsachse des Isolators vermieden werden.
In einer bevorzugten Ausgestaltung der Erfindung sind Stützplatte und Klemmelement zwischen Anschlagelement und Spannmutter angeordnet und weisen fluchtende Bohrungen auf, die von dem Spannbolzen durchsetzt sind. Eine solche Befestigungsvorrichtung ist durch einfaches Zusammenstecken und Spannen einer Mutter montierbar.

Erfingdungsgemäß weist der Spannbolzen einen gebogenen Bügelabschnitt auf, durch den eine mit dem Isolator verbindbare Befestigungsöse kardanisch aufgenommen ist. Eine solche Befestigungsvorrichtung ist besonders einfach herzustellen und gewährleistet eine Beweglichkeit des Isolators um zwei verschiedene Achsen.
Vorteilhaft ist dabei die Befestigungsöse mit einer Gewindehülse verbunden, die mit einem Anschlussbolzen eines Isolators verschraubbar ist. Eine solche Befestigungsvorrichtung ist mit jedem Isolator verwendbar, der einen Anschlussbolzen aufweist und ist besonders einfach zu montieren.

Erfindungsgemäß ist ein erster Randabschnitt des Klemmelements zum Abstützen auf der Masttraverse umgebogen, und ein diesem gegenüberliegender zweiter Randabschnitt auf einem umgebogenen ersten Endabschnitt der Stützplatte abgestützt. Hierdurch wird eine Federwirkung erreicht, die die Klemmwirkung auch bei Erschütterungen oder Vibrationen beibehält.
Weiterhin wird bevorzugt, dass ein zweites Ende der Stützplatte zu einem Sicherungshaken umgebogen ist, der derart um eine Kante einer Masttraverse herumlegbar ist, dass ein Herunterfallen der Befestigungsvorrichtung verhindert ist. Somit kann die Befestigungsvorrichtung zunächst an die Masttraverse gehängt werden, ist damit vor Herunterfallen gesichert und kann dadurch leichter montiert werden.
Des Weiteren sieht eine vorteilhafte Ausgestaltung der Erfindung vor, dass die Stützplatte auf ihrer der Masttraverse abgewandten Seite ein Sackloch zur Aufnahme eines Endes des Bügelabschnitts aufweist. Der Spannbolzen ist dadurch verdrehfest festgelegt und kann sich beim Anziehen der Spannmutter nicht mitdrehen, was die Montage erleichtert.
In einer weiteren vorteilhaften Ausgestaltung verbindet ein Verbindungskabel den Spannbolzen mit dem Isolator elektrisch. Hierdurch wird eine von der beweglichen Aufhängung unabhängige elektrische Verbindung bereitgestellt.
Im Folgenden wird die Erfindung anhand der Zeichnungen näher erläutert. Dabei zeigen:
- Figur 1: eine 3D Darstellung einer erfindungsgemäßen Befestigungsvorrichtung,
- Figur 2: einen Schnitt durch die Befestigungsvorrichtung gemäß Figur 1,
- Figur 3: eine weitere Ausführungsform einer Befestigungsvorrichtung

Einander entsprechende Teile sind in allen Figuren mit den gleichen Bezugszeichen versehen.

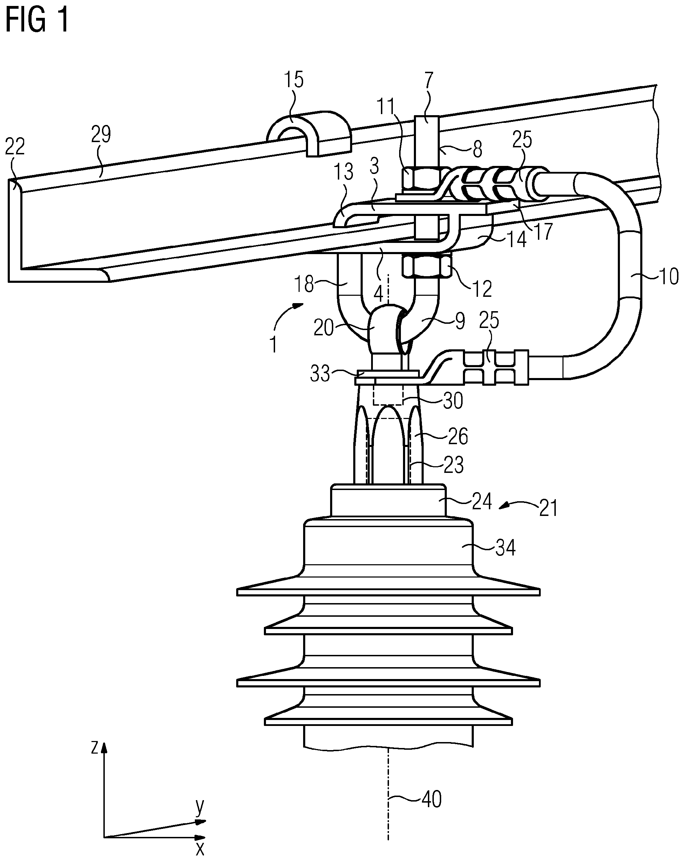

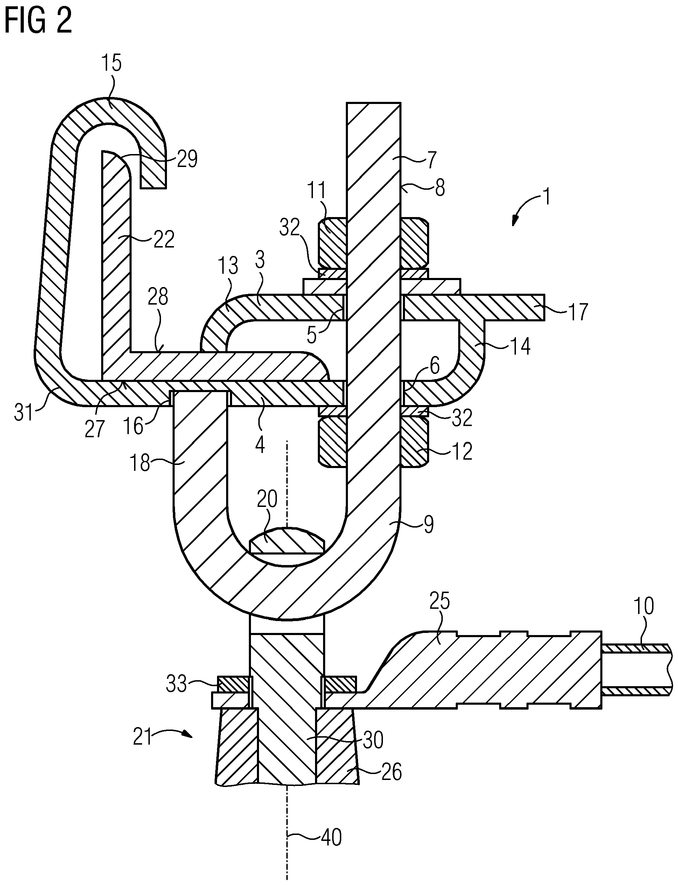

Die Figuren 1 und 2 zeigen dieselbe Befestigungsvorrichtung 1. Ein Isolator 21 ist mittels der Befestigungsvorrichtung 1 an einer Masttraverse 22 eines Mastes eines Stromübertragungsnetzes angebracht.

Der Isolator 21 ist ein im Wesentlichen zylindrischer Körper, der sich entlang einer Längsachse 40 erstreckt und der an seinen Enden von Anschlussarmaturen 24 begrenzt ist. Die erdseitige Anschlussarmatur 24 ist über die Masttraverse elektrisch mit der Erde verbunden, die nicht dargestellte hochspannungsseitige Endarmatur mit einer am Mast befestigten Freileitung eines Hoch- oder Mittelspannungsnetzes. Die Außenseite des Isolators 21 weist meist ein wetterfestes, elektrisch isolierendes Gehäuse 34 mit Schirmen zur Kriechwegverlängerung auf.

Der nicht dargestellte Mast trägt beispielsweise eine oder mehrere Hoch- oder Mittelspannungsfreileitungen. Die Masttraverse 22 ist häufig an einem Ausleger des Mastes angebracht und ist meist ein Profilstahl mit einem Flach-, Winkel-, T-, Doppel-T- oder U-Profil. In den Figuren 1 und 2 ist als Beispiel ein Winkelprofil gezeigt, das aus zwei rechtwinklig zusammengefügten Flachprofilen besteht. Jedes Flachprofil weist hier erste und zweite Flächen 27, 28 genannte breite Seiten, die einander gegenüberliegen und zwei schmale Kanten 29 auf. Die Befestigungsvorrichtung 1 umfasst einen Spannbolzen 7, eine Stützplatte 4 und ein Klemmelement 3 sowie eine Spannmutter 11. Der Spannbolzen 7 ist im Wesentlichen ein Rundstahl, der zumindest auf einem Teil seiner Mantelfläche einen Gewindeabschnitt 8 mit einem Außengewinde aufweist.

Die Stützplatte 4 liegt mit einem Teil ihrer Oberfläche flächig an einer ersten Fläche 27 der Masttraverse 22 an. An einem ersten Endabschnitt 14 ist die Stützplatte 4 umgebogen, im vorliegenden Beispiel rechtwinklig. Ein dem ersten Endabschnitt 14 gegenüberliegendes Ende der Stützplatte ist zu einem Sicherungshaken 15 umgebogen, der um eine Kante 29 des Winkelprofils der Masttraverse 22 gelegt ist um ein Herunterfallen der Befestigungsvorrichtung 1, beispielsweise während der Montage, zu verhindern. Die Stützplatte 4 ist dazu nahezu rechtwinklig umgebogen, an ihrem äußersten Ende ist ein halbkreisförmiger Bogen angeformt, der um die Kante 29 der Masttraverse 22 herum gelegt ist.

Das Klemmelement 3 weist einen ersten Randabschnitt 13 auf, der zur Abstützung auf einer zweiten Fläche der Masttraverse 22 umgebogen ist. Ein dem ersten Randabschnitt 13 gegenüberliegender zweiter Randabschnitt 17 stützt sich außerhalb der Masttraverse 22 auf dem umgebogenen ersten Endabschnitt 14 der Stützplatte 4 ab.

Stützplatte 4 und Klemmelement 3 weisen fluchtende Bohrungen 5, 6 auf, die von dem Spannbolzen 7 durchsetzt sind. An dem Spannbolzen 7 ist ein Anschlagelement 12 angeordnet. Dieses Anschlagelement 12 kann ein an den Spannbolzen 7 angeformter Kragen sein oder eine auf das Außengewinde aufgeschraubte Anschlagmutter. Außerdem ist auf dem Spannbolzen 7 eine Spannmutter 11 in Form einer auf das Außengewinde aufgeschraubten Mutter mit Innengewinde angeordnet. Die Anordnung aus Stützplatte 4 und Klemmelement 3 ist zwischen dem Anschlagelement 12 und der Spannmutter 11 angeordnet. Im gezeigten Beispiel ist die Stützplatte 4 auf dem Anschlagelement 12 abgestützt, die Spannmutter 11 liegt auf der gegenüberliegenden Seite am Klemmelement 3 an. Durch Verdrehen der Spannmutter 11 in Richtung des Anschlagelements 12 sind Stützplatte 4 und Klemmelement 3 miteinander verspannbar. Die Masttraverse 22 wird dabei zwischen der Stützplatte 4 und dem ersten Randabschnitt 13 des Klemmelementes 3 eingeklemmt. Der erste Randabschnitt 13 und der erste Endabschnitt 14 wirken dabei federnd. Die Befestigungsvorrichtung 1 kann so an der Masttraverse 22 fixiert werden. An dem außerhalb der Anordnung aus Stützplatte 4 und Klemmelement 3 liegenden Ende des Spannbolzens 7 kann nun der Isolator 21 beweglich hängend befestigt werden. Beispielsweise kann das Ende des Spannbolzens 7 eine Kugelpfanne aufweisen und eine korrespondierende Kugel am Ende des Isolators 21, beispielsweise am Anschlussbolzen 23, befestigbar sein. So lässt sich eine Kugelgelenkverbindung zwischen Isolator 21 und Spannbolzen 7 herstellen. Eine bevorzugte Verbindung in Gestalt einer kardanischen Aufhängung ist in den Figuren 1 bis 3 gezeigt.

Dort weist der Spannbolzen einen Haltebügel auf. Dieser besteht aus einem gebogenen Bügelabschnitt 9 und einem geraden zweiten Endabschnitt 18. Auf dem Bügelabschnitt 9 ist eine Befestigungsöse 20 aufgefädelt. Die Befestigungsöse 20 ist mit dem Isolator 21 verbindbar beispielsweise mittels einer Gewindehülse 26, in die einerseits ein Anschlussbolzen 23 des Isolators 21 und andererseits ein an der Befestigungsöse 20 angeordneter Gewindebolzen 30 eingeschraubt werden kann. Die Befestigungsöse 20 ist entlang des Bügelabschnitts 9 beweglich. Hierdurch ist der Isolator 21 in einer Ebene parallel zur xz-Ebene der Figur 1 um die Befestigungsöse 20 gelagert. Andererseits ist die Befestigungsöse 20 um den Bügelabschnitt 9 drehbar. Dadurch ist der Isolator 21 in einer Ebene parallel zur zy-Ebene drehbar gelagert. Diese drehbare Lagerung um zwei vorzugsweise senkrecht zueinander stehende Lagerachsen wird im Sinne der Erfindung als kardanische Aufhängung verstanden.

Der Isolator 21 ist so an seinem erdseitigen Ende beweglich an der Masttraverse 22 aufgehängt. Das nicht dargestellte hochspannungsseitige Ende des Isolators 21 ist mittels eines Anschlusskabels mit einer am Mast aufgehängten Freileitung eines Hoch- oder Mittelspannungsnetzes verbunden. Wird nun bei starkem Wind das Anschlusskabel aus seiner Ruheposition bewegt, so kann der Isolator 21 sich in der beweglichen Aufhängung derart ausrichten, dass der Zug des Anschlusskabels in Richtung seiner Längsachse 40 wirkt. Somit werden Zugbelastungen quer zur Längsachse 40 vermieden.

In der bevorzugten Ausführung gemäß den Figuren weist die Stützplatte 4 auf der der Masttraverse 22 abgewandten Seite ein Sackloch 16 auf, in das das Ende des geraden Endabschnitts 18 des Haltebügels eintaucht. Hierdurch kann sich der Spannbolzen 7 beim Spannen der Spannmutter 11 nicht verdrehen.

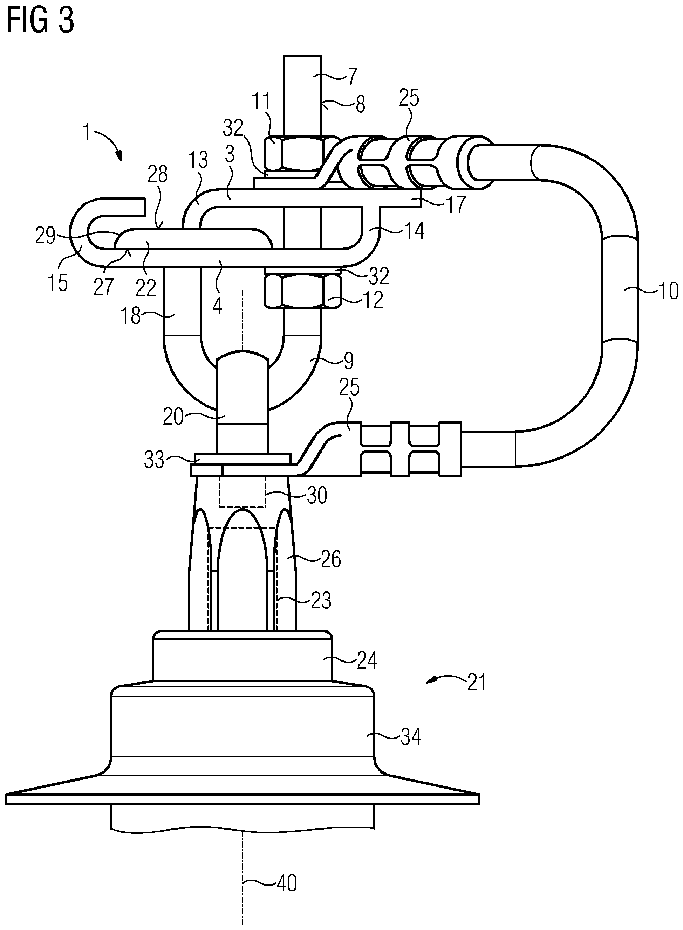

Auf einem dem ersten Endabschnitt 14 entgegengesetzten Ende weist die Stützplatte 4 einen Sicherungshaken 15 auf. Die Stützplatte 4 ist dazu am Ende derart umgebogen, dass sie eine Kante 29 des Profils der Masttraverse 22 umgreift. In den Figuren 1 und 2, die die Ausführung für eine Masttraverse 22 mit Winkelprofil zeigen ist die Stützplatte 4 an einem Knick 31 zusätzlich um nahezu 90° abgewinkelt. Der Abstand zwischen dem Knick 31 und dem Sicherungshaken 15 entspricht etwa der Profilbreite der Masttraverse 22. Bei der Ausführung gemäß Figur 3 für eine Masttraverse 22 mit Flachprofil wird kein solcher Knick benötigt.

Zwar besteht eine elektrische Verbindung von der Masttraverse 22 über die Stützplatte 4, den Spannbolzen 7, die bewegliche Aufhängung beispielsweise in Form der Befestigungsöse 20 oder dem Kugelgelenk schließlich zum Anschlussbolzen 23 des Isolators 21, diese hat jedoch je nach Art der beweglichen Aufhängung eine relativ kleine Kontaktfläche, die bei Bewegung des Isolators 21 möglicherweise sogar unterbrochen werden kann. Um eine elektrische Verbindung unabhängig von der beweglichen Aufhängung und mit einer hinreichenden Kontaktfläche auch im Falle abzuleitender hoher Ströme zu gewährleisten wird diese durch ein Verbindungskabel 10 hergestellt. Das Verbindungskabel 10 ist flexibel und erlaubt eine Bewegung des Isolators 21 in der beweglichen Aufhängung. Das Verbindungskabel 10 kann an der Stützplatte 4 oder dem Klemmelement 3 befestigt sein. In den Figuren ist Letzteres gezeigt. Das Verbindungskabel 10 ist mit einem Ende zwischen dem Klemmelement 3 und der Spannmutter 11, gegebenenfalls mit einer Unterlegscheibe 32, angeordnet und wird beim Anziehen der Spannmutter 11 an das Klemmelement 3 gepresst. Das andere Ende des Verbindungskabels 10 ist an der Gewindehülse 26 befestigt. Dazu kann beispielsweise der Gewindebolzen 30 der Befestigungsöse 20 einen Kragen 33 aufweisen. Zur leichteren Montage sind an den Enden des Verbindungskabels 10 Kabelschuhe 25 angebracht.

## Patentansprüche

1. Befestigungsvorrichtung (1) zur klemmenden Befestigung eines Isolators (21) an einer ein Flach- oder Winkelprofil aufweisenden Masttraverse (22), umfassend
- eine Stützplatte (4) und ein Klemmelement (3) zur Anlage an gegenüberliegenden Flächen (27, 28) der Masttraverse (22),
- einen die Stützplatte (4) und das Klemmelement (3) verbindenden Spannbolzen (7) mit einem Gewindeabschnitt (8) entlang dem eine Spannmutter (11) verstellbar angeordnet ist und einem Anschlagelement (12),
wobei die Stützplatte (4) und das Klemmelement (3) durch Verstellen der Spannmutter (11) in Richtung Anschlagelement (12) gegen die Masttraverse (22) klemmbar sind,
**dadurch gekennzeichnet,**
**dass** der Spannbolzen (7) einen gebogenen Bügelabschnitt (9) aufweist, durch den eine mit dem Isolator (21) verbindbare Befestigungsöse (20) kardanisch aufnehmbar ist, so dassder Isolator (21) beweglich hängend am Spannbolzen befestigbar ist, und dass
ein erster Randabschnitt (13) des Klemmelements (3) zum Abstützen auf der Masttraverse (22) umgebogen und ein diesem gegenüberliegender zweiter Randabschnitt (17) auf einem umgebogen ersten Endabschnitt (14) der Stützplatte (4) abgestützt ist, wobei sich im an einer Masttraverse befestigten Zustand der Befestigungsvorrichtung (1) eine Federwirkung ergibt.

2. Befestigungsvorrichtung (1) nach Anspruch 1,
**dadurch gekennzeichnet,**
**dass** Stützplatte (4) und Klemmelement (3) zwischen Anschlagelement (12) und Spannmutter (11) angeordnet sind und fluchtende Bohrungen (5, 6) aufweisen, die von dem Spannbolzen (7) durchsetzt sind.

3. Befestigungsvorrichtung (1) nach Anspruch 2,
**dadurch gekennzeichnet,**
**dass** die Befestigungsöse (20) mit einer Gewindehülse (26) verbunden ist, die mit einem Anschlussbolzen (23) eines Isolators (21) verschraubbar ist.

4. Befestigungsvorrichtung (1) nach einem der Ansprüche 1 bis 3,
**dadurch gekennzeichnet, dass**
ein zweites Ende der Stützplatte (4) zu einem Sicherungshaken (15) umgebogen ist, der derart um eine Kante (29) einer Masttraverse (22) herumlegbar ist, dass ein Herunterfallen der Befestigungsvorrichtung (1) verhindert ist.

5. Befestigungsvorrichtung nach einem der Ansprüche 1 bis 4,
**dadurch gekennzeichnet, dass**
die Stützplatte (4) auf ihrer der Masttraverse (22) abgewandten Seite ein Sackloch (16) zur Aufnahme eines Endes (18) des Bügelabschnitts (9) aufweist.

6. Befestigungsvorrichtung nach einem der Ansprüche 1 bis 5,
**dadurch gekennzeichnet,**
**dass** ein Verbindungskabel (10) den Spannbolzen (7) mit dem Isolator (21) elektrisch verbindet.

## Claims

1. Fastening apparatus (1) for fastening an insulator (21) in a clamping manner to a mast crossmember (22) which has a flat or angled profile, comprising
- a supporting plate (4) and a clamping element (3) for bearing against opposite faces (27, 28) of the mast crossmember (22),
- a clamping bolt (7) which connects the supporting plate (4) and the clamping element (3) and has a threaded section (8), along which a clamping nut (11) is adjustably arranged, and a stop element (12),
wherein the supporting plate (4) and the clamping element (3) can be clamped against the mast crossmember (22) by adjusting the clamping nut (11) in the direction of the stop element (12),
**characterized**
**in that** the clamping bolt (7) has a bent bow section (9) by way of which a fastening lug (20), which can be connected to the insulator (21), can be held by a gimbal, so that the insulator (21) can be fastened to the clamping bolt in a suspended manner such that it can move, and that a first edge section (13) of the clamping element (3) to be supported on the mast crossmember (22) is bent over and a second edge section (17), which is situated opposite the said first edge section, is supported on a bent-over first end section (14) of the supporting plate (4), wherein a spring action is produced in the state of the fastening apparatus (1) in which it is fastened to a mast crossmember.

2. Fastening apparatus (1) according to Claim 1,
**characterized**
**in that** supporting plate (4) and clamping element (3) are arranged between stop element (12) and clamping nut (11) and have bores (5, 6) which are in alignment and through which the clamping bolt (7) passes.

3. Fastening apparatus (1) according to Claim 2,
**characterized**
**in that** the fastening lug (20) is connected to a threaded sleeve (26) which can be screwed to a connection bolt (23) of an insulator (21).

4. Fastening apparatus (1) as claimed in one of Claims 1 to 3,
**characterized**
**in that** a second end of the supporting plate (4) is bent over to form a safety hook (15) which can be placed around an edge (29) of a mast crossmember (22) in such a way that the fastening apparatus (1) is prevented from falling down.

5. Fastening apparatus according to one of Claims 1 to 4,
**characterized**
**in that** the supporting plate (4) has, on its side which is averted from the mast crossmember (22), a blind hole (16) for receiving one end (18) of the bow section (9).

6. Fastening apparatus according to one of Claims 1 to 5,
**characterized**
**in that** a connecting cable (10) electrically connects the clamping bolt (7) to the insulator (21).

## Revendications

1. Dispositif (1) de fixation par serrage d'un isolateur (21) sur une traverse (22) de poteau ayant un profil plat ou une cornière, comprenant
- une plaque (4) d'appui et un élément (3) de serrage pour s'appliquer à des surfaces (27, 28) opposées de la traverse (22) de poteau,
- un boulon (7) de tension reliant la plaque (4) d'appui et l'élément (3) de serrage et ayant une partie (8) filetée le long de laquelle est monté mobile un écrou (11) tendeur et un élément (12) de butée,
dans lequel la plaque (4) d'appui et l'élément (3) de serrage peuvent être serrés sur la traverse (22) de poteau, par déplacement de l'écrou (11) tendeur dans la direction de l'élément (12) de butée,
**caractérisé**
**en ce que** le boulon (7) de tension a une partie (9) en étrier incurvée, par laquelle un oeillet (20) de fixation, pouvant être relié à l'isolateur (21), peut être reçu à la cardan, de sorte que l'isolateur (21) peut être fixé de manière mobile en étant suspendu au boulon de tension et **en ce que**
une première partie (13) de bord de l'élément (3) de serrage est, pour l'appui sur la traverse (22) de poteau, recourbée et une deuxième partie (17) de bord, qui lui est opposée, est appuyée sur une première partie (14) d'extrémité recourbée de la plaque (4) d'appui, le dispositif (1) de fixation donnant un effet de ressort dans un état fixé à une traverse de poteau.

2. Dispositif (1) de fixation suivant la revendication 1,
**caractérisé**
**en ce que** la plaque (4) d'appui et l'élément (3) de serrage sont disposés entre l'élément (12) d'appui et l'écrou (11) de tendeur et ont des trous (5, 6) en alignement, dans lesquels passe le boulon (7) de tension.

3. Dispositif (1) de fixation suivant la revendication 2,
**caractérisé**
**en ce que** l'oeillet (20) de fixation est relié à manchon (26) taraudé, qui peut se visser avec un boulon (23) de connexion d'un isolateur (21).

4. Dispositif (1) de fixation suivant l'une des revendications 1 à 3,
**caractérisé**
**en ce qu'**une deuxième extrémité de la plaque (4) d'appui est recourbée en un crochet (15) de sécurité, qui est mis de telle sorte, autour d'un bord (29) d'une traverse (22) de poteau, que le dispositif (1) de fixation est empêché de tomber.

5. Dispositif (1) de fixation suivant l'une des revendications 1 à 4,
**caractérisé**
**en ce que** la plaque (4) d'appui a, du côté éloigné de la traverse (22) du poteau, un trou (16) borgne de logement d'une extrémité (18) de la partie (9) en étrier.

6. Dispositif (1) de fixation suivant l'une des revendications 1 à 5,
**caractérisé**
**en ce qu'**un câble (10) de liaison relie électriquement le boulon (7) de tension à l'isolateur (21).
